# EUROPÄISCHE PATENTSCHRIFT

(11) **EP 2 068 530 B1**
(45) Veröffentlichungstag und Bekanntmachung des Hinweises auf die Patenterteilung: **16.08.2017**
(21) Anmeldenummer: 08017269.5
(22) Anmeldetag: 01.10.2008
(51) Int. Cl.: H04L 29/06, G06F 21/33

(54) **Verfahren und Kommunikationssystem zum Steuern des Zugangs zu Medieninhalten in Abhängigkeit des Alters eines Nutzers**
Method and communication system for controlling the access to media contents depending on the age of a user
Procédé et système de communication destinés à la commande de l'accès à des contenus médias relatifs à l'âge d'un utilisateur

(30) Priorität: 03.12.2007 DE 102007058351
(43) Veröffentlichungstag der Anmeldung: 10.06.2009
(73) Patentinhaber: Deutsche Telekom AG, 53113 Bonn (DE)
(72) Erfinder: Bause, Thomas, 30453 Hannover (DE); Hesse, Hans, Joachim, 53175 Bonn (DE); Kompart, Andreas, 53757 Sankt Augustin (DE)
(74) Vertreter: Blumbach Zinngrebe

(56) Entgegenhaltungen:
- EP-A- 1 331 543
- EP-A- 1 804 418
- WO-A-2005/098565
- WO-A-2006/076696
- US-A1- 2006 080 545
- KJM: "Übersicht über positiv bewertete Konzepte für geschlossene Benuterzgruppen"[Online] Juni 2007 (2007-06), XP002522742 Gefunden im Internet: URL:http://web.archive.org/web/20070613084 309/www.kjm-online.de/public/kjm/index.php ?show_1=91,85,56> [gefunden am 2009-04-06]

## Beschreibung

Die Erfindung betrifft im Allgemeinen das Freischalten des Zugangs zu digitalen Informationen, die nur für Erwachsene bestimmt sind, und insbesondere ein Verfahren zum Steuern des Zugangs zu Medieninhalten in Abhängigkeit des Alters eines Nutzers. Ferner betrifft die Erfindung ein Kommunikationssystem zum Steuern des Zugangs zu Medieninhalten in Abhängigkeit des Alters eines Nutzers.

Um zu gewährleisten, dass beispielsweise über das Internet angebotenen Videofilme, die nur für Erwachsene vorgesehen sind, auch nur diesem Personenkreis zugänglich gemacht werden, müssen sich Internetnutzer vor dem Runterladen solcher Videofilme authentifizieren und einer Altersverifizierung unterziehen. Ein hierfür geeignetes Altersverifizierungssystem ist unter dem Namen "x-check" der Firma coolspot AG bekannt. Dieses Altersverifizierungssystem erlaubt einen Zugriff auf Erwachsenenunterhaltung auch mittels eines Mobilfunkgerätes.

Das Konzept "x-check" der Firma coolspot AG wurde von der Kommission für Jugendmedienschutz (KJM) positiv bewertet. Weitere von der KJM positiv bewertete Konzepte für Systeme bzw. für einzelne Module zur Sicherstellung einer geschlossenen Benutzergruppe sind in einer über die Internetadresse http://web.archive.org/web/20070613084 309/www.kjm-online.de/public/kjm/index.php ?show_1=91,85,56> zugänglichen Übersicht zusammengestellt. Aus WO 2006/076696 A2 ist ein System und ein Verfahren zur Verifizierung des Alters und der Identität von Personen und zur Beschränkung des Zugriffs auf entsprechendes Material bekannt, wobei eine Authentifizierung bei Einrichten eines Internetzugangs beispielsweise mittels einer Face-to-Face-Kontrolle oder mittels eines Nummernvergleichs erfolgt. Bei dem Nummernvergleich berechnet der Benutzer aus einer Identifikationsinformation, welche den Benutzer eindeutig identifiziert, mittels einer vorgegebenen mathematischen Formel einen ersten Zahlenwert. Die Prüfinstanz ermittelt mittels der gleichen mathematischen Formel aus einer korrespondierenden, dem Benutzer zugeordneten Identifikationsinformation, welche aus einer zugänglichen sicheren Datenbank abgerufen wird, einen zweiten Zahlenwert, vergleicht diesen mit dem ersten Zahlenwert und führt bei Übereinstimmung eine Alterprüfung durch. Ein erfolgreich authentifizierter Erwachsener erhält einen Zugang mit vollen Zugriffsrechten. Authentifizierte Minderjährige können den Zugang der Eltern verwenden, wobei zu diesem Zweck von dem Erwachsenen ein Nutzerprofil für den minderjährigen Nutzer eingerichtet wird. Für den Zugriff auf einen eingerichteten Zugang kann ein zweischichtiges Anmeldeverfahren vorgesehen sein, bei dem zunächst eine Zugangs-ID mit zugeordneten Passwort und danach eine Profil-ID mit zugeordnetem Passwort eingegeben werden, um die parallele Nutzung eines gemeinsamen Zugangs durch mehrere Benutzer unterschiedlichen Alters und unterschiedlichen Nutzerprofils zu ermöglichen.

In EP 1 804 418 A1 wird ein Verfahren und ein System zur Authentifizierung beschrieben, wobei auf einem mobilen Telekommunikationsendgerät und einem Authentifizierungs-Server ein gemeinsames Geheimnis hinterlegt wird, und wobei zur Authentifizierung durch das Telekommunikationsendgerät aus dem gemeinsamen Geheimnis und einer Zusatzinformation, beispielsweise einer Zeitinformation, mittels eines vorgegebenen Algorithmus ein dynamisches Passwort erzeugt wird und zum Authentifizierungs-Server übertragen wird. Dort wird aus dem dynamischen Passwort mittels eines zugeordneten Algorithmus und unter Verwendung des gemeinsamen Geheimnisses die verschlüsselte Zusatzinformation rückgewonnen und geprüft.

Der vorliegenden Erfindung liegt die Aufgabe zugrunde, ein Verfahren sowie ein Kommunikationssystem zum Steuern des Zugangs zu Medieninhalten in Abhängigkeit des Alters eines Nutzers bereitzustellen, welche eine höhere Sicherheit bei der Altersverifizierung und eine eindeutige Authentifizierung des Nutzers ermöglichen.

Ein Kerngedanke der vorliegenden Erfindung ist darin zu sehen, dass eine Altersverifizierung mit einer eindeutigen Authentifizierung des Nutzers durchgeführt wird, um den Zugang zu einem angeforderten Medieninhalt zu steuern. Die Altersverifizierung wird in einer Altersverifizierungseinrichtung und die Authentifizierung des Nutzers in einem Server eines Trust-Centers durchgeführt. Zur Authentifizierung und/oder Authorisierung des Nutzers wird sowohl im Server als auch in einem mobilen Endgerät des Nutzers jeweils ein nur einmal gültiges Einmalpasswort erzeugt, welche im Server miteinander verglichen werden. Die Einmalpasswörter werden bei jeder Authentifizierung und/oder Authorisierung eines Nutzers neu berechnet. Auf diese Weise können das Kommunikationssystem und das Verfahren gegen passive Angriffe besser gesichert werden. Ferner sind auch sogenannte Replay-Attacken unmöglich.

Das obengenannte technische Problem wird durch ein Verfahren gemäß des Patentanspruchs 1 gelöst. Bei den Medieninhalten handelt es sich vorzugsweise um auf Internet-Servern bereitgestellte Webseiten, Videofilme und dergleichen, die nur für Personen mit einem Mindestalter freigeschaltet werden dürfen.

Ein Nutzer, der einen Medieninhalt anfordern möchte, gibt eine erste ihm zugeordnete Nutzerkennung an einem Kommunikationsendgerät ein. Die erste Nutzerkennung wird nachfolgend auch als Nutzerkennung für einen ausgewählten Medieninhalt oder als Nutzerkennung für eine Webseite bezeichnet. Die erste Nutzerkennung wird zu einem Medieninhalt-Server eines Anbieters und zu einem Server eines Trust-Centers übertragen. In einem mobilen Endgerät, welches dem Medieninhalt anfordernden Nutzer zugeordnet ist, wird ein erstes, nur für den aktuell angeforderten Medieninhalt gültiges Einmalpasswort erzeugt. Ein zweites Einmalpasswort wird in dem Server des Trust-Centers erzeugt.

Das erste Einmalpasswort wird vom mobilen Endgerät zum Server des Trust-Centers übertragen. Im Server des Trust-Centers erfolgt sodann eine Authentifizierung und/oder Authorisierung des Nutzers, indem das erste und zweite Einmalpasswort verglichen werden.

Darüber hinaus erfolgt eine Altersverifizierung des Nutzers, indem unter Ansprechen auf eine zweite, dem Nutzer zugeordnete Kennung ermittelt wird, ob der den Medieninhalt anfordernde Nutzer ein vorbestimmtes Mindestalter besitzt.

Die zweite Nutzerkennung wird vom Nutzer vorzugsweise dann vergeben, wenn er sich am Altersverifizierung-Dienst anmeldet. Im Folgenden wird die zweite Nutzerkennung auch als sogenannte AVS (Altersverifizierungssystem)-Nutzerkennung bezeichnet. In Abhängigkeit von dem Vergleichsergebnis der Nutzer-Authentifizierung und von dem Ermittlungsergebnis der Altersverifizierung wird der Zugang zu dem angeforderten Medieninhalt gesteuert.

Der Zugriff auf den angeforderten Medieninhalt wird freigegeben, wenn das erste und das zweite Einmalpasswort übereinstimmen und der Nutzer das vorbestimmte Mindestalter hat.

Ein Vorteil der mobilen Authentifizierung des Nutzers ist darin zu sehen, dass zur Erzeugung von Einmalpasswörtern keine Netzabdeckung durch das Mobilfunknetz erforderlich ist, da die Berechnung der Einmalpasswörter im mobilen Endgerät selbst erfolgt.

Vorteilhafte Weiterbildungen sind Gegenstand der Unteransprüche.

Eine vorteilhafte Weiterbildung sieht vor, dass das erste und zweite Einmalpasswort jeweils unter Verwendung eines gemeinsamen geheimen Basispasswortes erzeugt werden. Das gemeinsame geheime Basispasswort ist sowohl dem Server des Trust-Centers als auch dem mobilen Endgerät bekannt.

Angemerkt sei an dieser Stelle, dass das gemeinsame, geheime Basispasswort eindeutig dem Nutzer des mobilen Endgerätes zugeordnet ist. Das bedeutet ferner, dass jedem Nutzer, der an dem Alterverifizierungs- und Authentifizierungsdienst teilnimmt, ein individuelles, gemeinsames geheimes Basispasswort zugewiesen wird. Auf das gemeinsame, geheime Basispasswort wird der gleiche Algorithmus angewandt, um das erste und zweite Einmalpasswort zu erzeugen. Denkbar ist, dass das Basispasswort einem vorbestimmten Zahlenwert entspricht, der bei jeder neuen Authentifizierung des Nutzers um einen vorbestimmten Wert verändert wird.

Meldet sich der Nutzer erstmalig an dem Medieninhalt-Server an, so wird bei der erstmaligen Eingabe der ersten Nutzerkennung auch die zweite Nutzerkennung mit eingegeben. In diesem Fall werden die erste und zweite Nutzerkennung zum Server des Trust-Centers übertragen. Um eine nutzerbezogene Authentifizierung im Server des Trust-Centers durchführen zu können, werden die erste und die zweite Nutzerkennung sowie das gemeinsame geheime Basispasswort des wenigstens einen Nutzers im Server oder in einer ihm zugeordneten Datenbank beispielsweise in Form einer Nachschlagetabelle gespeichert.

Wird beim Vergleichen des ersten und zweiten Einmalpasswortes (Authentifizierung) im Server des Trust-Centers festgestellt, dass die beiden Einmalpassworte übereinstimmen, und wird ferner festgestellt, dass der Nutzer ein vorbestimmtes Mindestalter (Altersverifizierung) besitzt, wird der den Medieninhalt anfordernde Nutzer im Server des Trust-Centers in einer anbieterbezogenen Benutzergruppe abgelegt. Die Benutzergruppe ist dem Anbieter des Medieninhalt-Servers zugeordnet. Auf diese Weise kann der Server des Trust-Centers einfach feststellen, ob ein Nutzer, der auf einen Medieninhalt zugreifen möchte, in der anbieterbezogenen Gruppe enthalten ist. Zudem wird die erste Nutzerkennung im Medieninhalt-Server gespeichert. Dadurch wird sichergestellt, dass der Nutzer bei Folgeanmeldungen an dem Medieninhalt-Server des Anbieters nur noch die erste Nutzerkennung eingeben muss.

Das Verfahren der Altersverifizierung enthält ferner den Schritt des Zugreifens auf die in einer Datenbank gespeicherten Nutzerinformationen, welche nutzerindividuelle Daten, insbesondere das Alter, und die zweite Nutzerkennung des wenigstens einen Nutzers enthalten. In der Praxis sind in der Datenbank die Nutzerinformationen einer Mehrzahl von Nutzern gespeichert. Die nutzerindividuellen Angaben werden nach einer Face-to-Face-Kontrolle in der Datenbank gesichert abgelegt.

Um sicherzustellen, dass das vom Server des Trust-Centers erzeugte zweite Einmalpasswort auch zu dem den Medieninhalt anfordernden Nutzer gehört, wird unter Ansprechen auf die erste und/oder zweite Nutzerkennung des Nutzers das entsprechend zugeordnete, gemeinsame geheime Basispasswort ausgewählt und dann das zweite Einmalpasswort unter Verwendung des ausgewählten, gemeinsamen geheimen Basispasswortes erzeugt.
Vorteilhafterweise handelt es sich bei der zweiten Nutzerkennung um die Rufnummer des mobilen Endgerätes. Das mobile Endgerät ist vorteilhafterweise ein Mobiltelefon.

Das Kommunikationsendgerät, an welchem die erste und/oder zweite Nutzerkennung eingegeben werden und vorteilhafterweise der angeforderte Medieninhalt dargestellt wird, ist entweder ein separates Endgerät oder das mobile Endgerät selbst.

Um sicherzustellen, dass der Nutzer auch der berechtigte Nutzer ist, kann dem Nutzer eine persönliche Nutzer-PIN zugeordnet werden. Diese Nutzer-PIN vergibt der Nutzer, wenn er sich an dem Altersverifizierungs- und Authentifizierungsdienst anmeldet. Demzufolge wird diese Nutzer-PIN nachfolgend auch als "AVS via OTP18-PIN" und der Dienst als "AVS via OTP18" bezeichnet. AVS steht für Altersverifizierungssystem, während die Buchstabenfolge OTP für One-Time-Passwort oder Einmalpasswort steht. Die Zahl 18 gibt das beispielhafte Mindestalter an. Die Nutzer-PIN kann auf Wissen (z. B. ein Passwort oder eine PIN), auf einem Besitz (beispielsweise einem Schlüssel oder einer intelligenten Karte), auf einer Eigenschaft (z. B. biometrische Merkmale wie zum Beispiel die Stimme, das Irisbild oder einen Fingerabdruck) oder auf einer entsprechenden Kombination basieren. Die Nutzer-PIN wird zusammen mit dem ersten Einmalpasswort vom mobilen Endgerät zum Server des Trust-Centers übertragen. Im Server des Trust-Centers wird die empfangene Nutzer-PIN mit einer im Server abgespeicherten Nutzer-PIN, welche dem Nutzer zugeordnet ist, verglichen.

Durch die Verwendung eines Einmalpasswortes als auch einer dem Nutzer zugeordneten Nutzer-PIN kann der Server des Trust-Centers sicherstellen, dass der den Medieninhalt anfordernde Nutzer auch wirklich der Berechtigte ist. Der Zugang zum angeforderten Medieninhalt wird aber für den Nutzer erst freigeschaltet, wenn zusätzlich auch die Altersverifizierung ergibt, dass der Nutzer das vorbestimmte Mindestalter hat.

Das obengenannte technische Problem wird ebenfalls durch ein Kommunikationssystem gemäß des Patentanspruchs 12 gelöst.

Das Kommunikationssystem weist einen Server eines Trust-Centers auf. Der Server des Trust-Centers enthält eine Speichereinrichtung, in der für wenigstens einen Nutzer eine erste und eine zweite Nutzerkennung gespeichert sind. Ferner weist der Server eine erste Erzeugungseinrichtung zum Erzeugen eines Einmalpasswortes unter Ansprechen auf die erste und/oder zweite Nutzerkennung sowie eine Vergleichseinrichtung zum Vergleichen eines erzeugten Einmalpasswortes mit einem von einem mobilen Endgerät empfangenen Einmalpasswortes auf. Ferner umfasst das Kommunikationssystem wenigstens ein mobiles Endgerät, welches eine zweite Erzeugungseinrichtung zum Erzeugen eines Einmalpasswortes und eine Sendeeinrichtung zum Aussenden des Einmalpasswortes zum Server des Trust-Centers aufweist. Weiterhin sind ein Medieninhalt-Server sowie eine Datenbank vorgesehen, in welcher nutzerindividuelle Daten, insbesondere das Alter und die zweite Nutzerkennung des wenigstens einen Nutzers gespeichert sind. Das Kommunikationssystem weist weiterhin eine Ermittlungseinrichtung auf, die unter Ansprechen auf in der Datenbank gespeicherte nutzerindividuelle Daten ermittelt, ob der einen Medieninhalt anfordernde Nutzer ein vorbestimmtes Mindestalter hat. Eine Steuereinrichtung dient dem Steuern des Zugangs zu dem vom Medieninhalt-Server bereitgestellten Medieninhalt in Abhängigkeit vom Ergebnis der Vergleichseinrichtung und der Ermittlungseinrichtung, d. h. in Abhängigkeit vom Ergebnis der Authentifizierung und der Altersverifizierung.

Gemäß einer vorteilhaften Weiterbildung sind die Datenbank und die Ermittlungseinrichtung dem Trust-Center zugeordnet.

Weiterhin weist das Kommunikationssystem vorteilhafterweise eine Eingabeeinrichtung zum Eingeben der ersten und/oder der zweiten Nutzerkennung sowie eine dritte Erzeugungseinrichtung zum Erzeugen eines Anforderungssignals zur Anforderung eines Medieninhalts am Medieninhalt-Server auf. Die Eingabeeinrichtung und die Erzeugungseinrichtung sind dem mobilen Endgerät oder einer separaten Kommunikationseinrichtung zugeordnet.

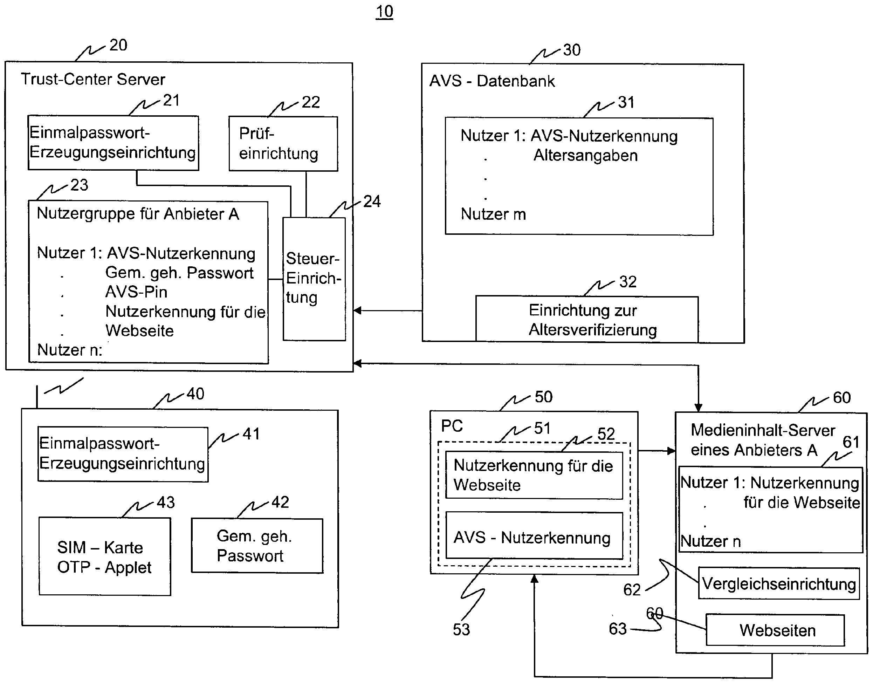

Die Erfindung wird nachfolgend anhand eines Ausführungsbeispiels in Verbindung mit einer einzigen Figur näher erläutert.

Die Figur zeigt ein beispielhaftes Kommunikationssystem 10 zur Altersverifizierung und Authentifizierung einer Person unter Verwendung eines Einmalpasswortes. Das Kommunikationssystem 10 enthält einen Server 20, der einem Trust-Center zugeordnet ist. Der Server 20 weist eine Erzeugungseinrichtung 21 zum Erzeugen eines Einmalpasswortes auf. Die Erzeugungseinrichtung 21 ist derart ausgebildet, dass sie bei jeder Authentifizierung eines Nutzers beispielsweise aus einem Basispasswort ein neues Einmalpasswort unter Anwendung eines vorbestimmten Algorithmus erzeugt. Das Einmalpasswort ist ein Passwort, welches zur Authentifizierung und/oder Authorisierung eines bestimmten Nutzers verwendet wird. Ein solches Einmalpasswort ist nur für einen einzigen Authentifizierungsvorgang gültig und kann kein zweites Mal benutzt werden. Mit anderen Worten erfordert jede erneute Authentifizierung des Nutzers ein neues Einmalpasswort.

Der Server 20 weist ferner eine Prüfeinrichtung 22 auf, die ein von der Erzeugungseinrichtung 21 erzeugtes Einmalpasswort mit einem von einem Mobilfunkendgerät 40 übertragenen Einmalpasswort vergleichen kann. Dem Server 20 ist weiterhin eine Speichereinrichtung 23 zugeordnet, in der beispielsweise die Nutzerinformationen aller Nutzer gespeichert werden, die zu einer Nutzergruppe eines Anbieters A zusammengefasst werden. Natürlich können auch Nutzergruppen anderer Anbieter in der Speichereinrichtung 23 abgelegt sein. In der Speichereinrichtung 23 des Servers 20 sind beispielsweise für jeden Nutzer eine AVS-Nutzerkennung, ein gemeinsames geheimes Basispasswort, eine AVS-PIN sowie eine Nutzerkennung für die Webseite oder Webseiten des Medieninhalt-Servers 60, auf die der jeweilige Nutzer zugreifen will, gespeichert.

Dem Anbieter A ist im vorliegenden Beispiel ein Medieninhalt-Server 60 zugeordnet. Demzufolge sind die in der Speichereinrichtung 23 abgelegten Nutzer 1 bis Nutzer n diejenigen Nutzer, die sich erfolgreich beim Anbieter A angemeldet haben und erstmalig auf Medieninhalte zugreifen wollen oder bereits auf Medieninhalte zugegriffen haben, die in einer Speichereinrichtung 63 des Medieninhalt-Servers 60 abgelegt sind. Die Steuerung und Überwachung des Servers 20 übernimmt eine Steuereinrichtung 24. Die Steuereinrichtung 24, die Prüfeinrichtung 22, die Erzeugungseinrichtung 21 und die Speichereinrichtung 23 können alle miteinander verbunden sein, um eine direkte Kommunikation zu ermöglichen.

Das mobile Endgerät 40, welches vorzugsweise ein Mobilfunktelefon ist, weist, wie der Server 20, eine Erzeugungseinrichtung 41 zum Erzeugen eines Einmalpasswortes auf. Die Erzeugungseinrichtung 41 wendet den gleichen Algorithmus zur Erzeugung eines Einmalpasswortes an wie die Erzeugungseinrichtung 21 des Servers 20. Anzumerken sei an dieser Stelle, dass das Mobilfunktelefon 40 dem Nutzer 1 zugeordnet ist, dessen Daten im Speicher 23 hinterlegt sind. Weiterhin weist das Mobilfunktelefon 40 einen Speicher 42 auf, in dem das gemeinsame geheime Basispasswort hinterlegt ist, welches auch im Speicher 23 dem Nutzer 1 zugeordnet ist. In üblicher Weise verfügt das Mobilfunktelefon 40 über eine SIM-Karte, in der eine Anwendungssoftware zur Unterstützung des Authentifizierungs- und Altersverifizierungsdienstes, nachfolgend auch OTP (One-Time-Passwort)-Applet genannt, gespeichert ist. Das OTP-Applet kann vom Nutzer 1 am Mobilfunktelefon 40 aufgerufen werden, um die Einleitung des Authentifizierungsprozesses zu steuern.

Der Server 20 kann mit einer AVS-Datenbank 30 verbunden sein, die innerhalb oder außerhalb des Trust-Centers aufgestellt ist. Die AVS-Datenbank 30 bildet die Grundlage für eine Altersverifizierung beispielsweise des Nutzers 1, wie nachfolgend noch näher erläutert wird. Die AVS-Datenbank ist durch einen Speicherbereich 31 dargestellt, in dem Nutzerinformationen, wie z. B. die AVS-Nutzerkennung des Nutzers 1, dessen Name sowie Altersangabe gespeichert sind. In der Praxis sind im Speicherbereich 31 der AVS-Datenbank 30 die relevanten Nutzerdaten derjenigen Nutzer 1 bis m enthalten, die am Authentifizierungs- und Altersverifizierungsdienst teilnehmen. Die Nutzerinformationen werden nach einer Face-to-Face-Kontrolle des jeweiligen Nutzers m in der Datenbank 30 abgelegt. In der AVS-Datenbank 30 ist ferner eine Altersverifizierungseinrichtung 32 angeordnet. Alternativ kann es sich bei der Altersverifizierungseinrichtung 32 auch um eine von der Datenbank 30 örtlich getrennte Einrichtung handeln.

Wie die Figur zeigt, ist im vorliegenden Beispiel dem Nutzer 1 des Mobilfunktelefons 40 ein Personalcomputer 50 zugeordnet. Der Nutzer 1 kann mittels des Personal Computers 50 beispielsweise über eine Internetverbindung auf wenigstens eine im Speicher 63 des Medieninhalt-Servers 60 hinterlegte Webseite zugreifen. Bei Freigabe des Zugriffs wird die angeforderte Webseite vom Medieninhalt-Server 60 beispielsweise über die aufgebaute Internetverbindung zum Personalcomputer 50 übertragen und dort dargestellt. Dem Personalcomputer 50 ist eine Eingabeeinrichtung 51 zugeordnet, über die der Nutzer 1, wie nachfolgend noch näher ausgeführt wird, eine Nutzerkennung für die Webseite und/oder seine AVS-Nutzerkennung eingeben kann. Mit den Bezugszeichen 52 und 53 sind die entsprechenden Eingabefelder bezeichnet.

Angemerkt sei an dieser Stelle, dass der Nutzer 1 bei einer alternativen Ausführungsform anstelle des Personalcomputers 50 auch das Mobilfunktelefon 40 zum Zugriff auf den Medieninhalt-Server 60 verwenden kann, wenn es entsprechend ausgebildet ist. In diesem Fall wird beispielsweise eine Internetverbindung zwischen dem Mobilfunktelefon 40 und dem Medieninhalt-Server 60 aufgebaut.

Ferner sei angemerkt, dass die AVS-Datenbank, die Altersverifizierungseinrichtung 32 und der Server 20 innerhalb des Trust-Centers oder an verschiedenen Orten aufgestellt sein können.

Die vom Mobilfunktelefon 40 zum Server 20 des Trust-Centers übertragenen Daten werden vorzugsweise über das Internet übertragen. Hierzu sendet das Mobilfunktelefon 40 die zu übertragenden Daten zunächst über ein Mobilfunknetz zu einer nahegelegenen Basisstation, die dann in Verbindung mit einem mobilen Vermittlungscontroller die Daten über das Internet zum Server 20 überträgt. In ähnlicher Weise können die AVS-Datenbank 30 und die Einrichtung zur Altersverifizierung 32 Daten mit dem Server 20 über eine Internetverbindung austauschen. Vorteilhafterweise können der Personalcomputer 50, der Medieninhalt-Server 60, der Server 20 des Trust-Centers, das Mobilfunktelefon, die AVS-Datenbank 30 und/oder die Einrichtung zur Altersverifizierung 32 Daten unter Einbindung des Internets unterienander austauschen.

Nachfolgend wird die Funktionsweise des dargestellten Kommunikationssystems 10 beispielhaft näher erläutert.

Angenommen sei, dass der Nutzer 1 eine Webseite vom Medieninhalt-Server 60 auf seinen Personal Computer runterladen möchte. Hierzu muss für den Nutzer 1 eine Altersverifizierung und eine Authentifizierung durchgeführt werden.

Um eine Altersverifizierung durchführen zu können, erfolgt zunächst eine Volljährigkeits- und Existenzprüfung des Nutzers 1 beispielsweise durch einen persönlichen Kontakt (Face-to-Face-Kontrolle) bei Abschluss eines Handy-Laufzeitvertrags (Post-Paid). Vorzugsweise muss sich der Nutzer 1 durch die Vorlage seines Personalausweises eindeutig identifizieren. Meldet sich der Nutzer 1 ferner bei dem Altersverifizierungsdienst an, so vergibt er eine AVS-Nutzerkennung. Die AVS-Nutzerkennung des Nutzers 1 ist vorteilhafterweise mit einem Prepaid- oder Postpaid-Konto verbunden, welches bei einem Payment-Service-Provider geführt wird. Auf diese Weise können die über die jeweiligen Webseiten abgerufenen, kostenpflichtigen Inhalte abgerechnet werden. Ein derartiges Bezahlsystem ist in der Figur nicht dargestellt. Nach der erfolgreichen Face-to-Face-Kontrolle werden im Speicherbereich 31 der Datenbank 30 Nutzerdaten, die AVS-Nutzerkennung und Angaben darüber abgelegt, dass der Nutzer 1 nachweislich existent und beispielsweise mindestens 18 Jahre alt ist. Auf ähnliche Weise werden in der AVS-Datenbank 30 die Nutzerinformationen weiterer m Nutzer abgelegt.

Wie bereits oben erwähnt, werden die zur Nutzung des Authentifizierungsdienstes notwendigen Daten, das sind vorzugsweise das gemeinsame geheime Basispasswort, die AVS-Pin und die AVS-Nutzerkennung der jeweiligen Nutzer im Server 20 des Trust-Centers hinterlegt.

Bevor der Nutzer 1 des Mobilfunktelefons 40 altersabhängige Webseiten über den Personalcomputer 50 am Medieninhalt-Server 60 anfordern und runterladen kann, muss er sich beim Anbieter A des Medieninhalt-Servers 60 einmalig anmelden. Hierzu wird zunächst eine Kommunikationsverbindung vom Personalcomputer 50 zum Medieninhalt-Server 60 hergestellt. Der Medieninhalt-Server 60 überträgt dann ein entsprechendes Anmeldeformular zum Personalcomputer 50. Die Anmeldung des Nutzers 1 erfolgt dadurch, dass er an der Eingabeeinrichtung 51 des Personalcomputers 50 eine neue Nutzerkennung für zumindest eine gewünschte Webseite oder für den Medieninhalt-Server 60 im Eingabefeld 52 sowie seine AVS-Nutzerkennung im Eingabefeld 53 eingibt. Die AVS-Nutzerkennung wurde dem Nutzer 1 beispielsweise bei der Anmeldung am Altersverifizierungsdienst mitgeteilt. Alternativ kann der Nutzer 1 diese AVS-Nutzerkennung auch selbst vergeben haben. Angemerkt sei an dieser Stelle, dass der Nutzer 1 für jede altersbeschränkte Webseite des Medieninhalt-Servers 60 eine eigene Nutzerkennung vergeben kann. Alternativ ist auch denkbar, dass der Nutzer 1 eine einzige Nutzerkennung für den Medieninhalt-Server 60 vergibt, so dass er nicht nur auf eine bestimmte, sondern auf alle altersbeschränkten Webseiten, die auf dem Medieninhalt-Server 60 hinterlegt sind, zugreifen kann.
Die Nutzerkennung für die Webseite und die AVS-Nutzerkennung des Nutzers 1 werden nunmehr vom

Personalcomputer 50 direkt zum Server 20 des Trust-Centers übertragen. Alternativ können die Nutzerkennung für die Webseite 52 und/oder die AVS-Nutzerkennung 53 vom Personalcomputer 50 zum Medieninhalt-Server 60 übertragen, und dann zum Server 20 weitergeleitet werden. Weiterhin kann der Medieninhalt-Server 60 ein Anforderungssignal zum Server 20 und gegebenenfalls zur AVS-Datenbank 30 übertragen. Angemerkt sei an dieser Stelle, dass der Medieninhalt-Server 60 die vom Personalcomputer 50 empfangene AVS-Nutzerkennung des Nutzers 1 auch zur AVS-Datenbank 30 weiterleiten kann. Die dem Nutzer 1 zugeordnete Nutzerkennung für die Webseite wird zunächst im Medieninhalt-Server 60 zwischengespeichert.

Sobald der Nutzer 1 das OTP-Applet an seinem Mobilfunktelefon 40 aufgerufen hat, wird er aufgefordert, die Einmalpasswort-Erzeugungseinrichtung 41 zu aktivieren und seine AVS-PIN einzugeben. Die Erzeugungseinrichtung 41 liest dann das gemeinsame, geheime Basispasswort aus dem Speicher 42 aus. Unter Anwendung eines vorbestimmten Algorithmus erzeugt die Erzeugungseinrichtung 41 ein Einmalpasswort. Das von der Erzeugungseinrichtung 41 erzeugte Einmalpasswort wird zusammen mit dem eingegebenen AVS-PIN vorzugsweise vom Mobilfunktelefon 40 zum Server 20 übertragen.
Um im Server 20 ebenfalls ein Einmalpasswort zu erzeugen, kann die Steuereinrichtung 24 unter Ansprechen auf das vom Medieninhalt-Server 60 kommende Anforderungssignal und unter Ansprechen auf die dem Nutzer 1 zugeordnete AVS-Nutzerkennung und/oder die Nutzerkennung für die Webseite dafür sorgen, dass das dem Nutzer 1 zugeordnete gemeinsame, geheime Basispasswort der Erzeugungseinrichtung 21 zugeführt wird. Die Erzeugungseinrichtung 21 erzeugt dann unter Verwendung des gemeinsamen, geheimen Basispassworts ebenfalls ein Einmalpasswort für den Nutzer 1. Im Server 20 findet nunmehr eine Authentifizierung des Nutzers 1 statt, indem das von der Erzeugungseinrichtung 21 erzeugte Einmalpasswort mit dem vom Mobilfunktelefon 40 empfangenen Einmalpasswort verglichen wird. Zusätzlich kann in der Prüfeinrichtung 22 auch das vom Mobilfunktelefon 40 empfangene AVS-PIN mit der im Speicher 23 dem Nutzer 1 zugeordneten AVS-PIN verglichen werden. Im vorliegenden Beispiel sei angenommen, dass sowohl die beiden Einmalpasswörter als auch die im Speicher 23 abgelegte AVS-PIN mit der vom Mobilfunktelefon 40 empfangene AVS-PIN übereinstimmen. Damit ist die Authentizität des Nutzers 1 festgestellt.

Die Altersverifizierungseinrichtung 32 prüft unter Ansprechen auf die vom Medieninhalt-Server 60 oder vom Server 20 empfangene AVS-Nutzerkennung des Nutzers 1, ob der Nutzer 1 das vorbestimmte Mindestalter hat. Unter Ansprechen auf die AVS-Nutzerkennung liest die Altersverifizierungseinrichtung 32 die dem Nutzer 1 zugeordneten Altersangaben aus dem Speicherbereich 31 aus und prüft deren Inhalt. Im vorliegenden Beispiel stellt die Altersverifizierungseinrichtung 32 fest, dass der Nutzer 1 volljährig ist und somit auf die angeforderte Webseiten des Medieninhalt-Servers 60 zugreifen darf.
Gemäß einer bevorzugten Ausführungsform informiert die Altersverifizierungseinrichtung 32 die Steuereinrichtung 24 des Servers 20 darüber, dass der Nutzer 1 volljährig ist. Die Steuereinrichtung 24 teilt demzufolge dem Medieninhalt-Server 60 mit, dass der Nutzer 1 authentifiziert worden ist und älter als 18 Jahre ist. Die Anmeldung des Nutzers 1 am Medieninhalt-Server 60 wird abgeschlossen, indem die Daten des Nutzers 1 - das können die AVS-Nutzerkennung, das gemeinsame geheime Basispasswort, die AVS-Pin und die Nutzerkennung für die angeforderte Webseite sein - der Nutzergruppe des Anbieters A zugeordnet und in der Speichereinrichtung 23 entsprechend abgelegt werden. Ferner wird die dem Nutzer 1 zugeordnete Nutzerkennung für die angeforderte Webseite in einem Speicher 61 des Medieninhalt-Servers 60 hinterlegt und der Zugriff auf die angeforderte, im Medieninhalt-Servers 60 hinterlegte altersabhängige Webseite für den Nutzer 1 freigeschaltet. Daraufhin kann der Medieninhalt-Server 60 die im Speicher 63 abgelegte Webseite zum Personalcomputer 50 und/oder zum Mobilfunktelefon 40 übertragen. Der Nutzer 1 kann beispielsweise aus der Nutzergruppe für den Anbieter A ausscheiden, wenn er die Löschung seiner Daten, zum Beispiel seine Nutzerkennungen, im Speicher 23 des Servers 20 und in der AVS-Datenbank 30 beauftragt.

Möchte der Nutzer 1 zu einem späteren Zeitpunkt erneut auf die im Medieninhalt-Server 60 gespeicherte Webseite zugreifen, muss er lediglich seine Nutzerkennung für die angeforderte Webseite im Eingabefeld 52 des Personal Computers 50 eingeben und am Mobilfunktelefon 40 das OTP-Applet 43 aktivieren. Das OTP-Applet fordert den Nutzer 1 wiederum auf, die Erzeugungseinrichtung 41 zu aktivieren und gegebenenfalls seine AVS-PIN einzugeben. Unter Verwendung des im Speicher 42 abgelegten, gemeinsamen, geheimen Basispassworts erzeugt die Erzeugungseinrichtung 41 ein neues Einmalpasswort, welches zusammen mit der AVS-PIN zum Server 20 übertragen wird. Die am Personalcomputer 50 eingegebene Nutzerkennung für die angeforderte Webseite wird zum Medieninhalt-Server 60 übertragen. Eine Vergleichseinrichtung 62 prüft, ob der Nutzer 1 bereits am Medieninhalt-Server 60 angemeldet worden ist. Wenn ja, wird die Nutzerkennung für die Webseite zum Server 20 weitergeleitet. Wenn nicht, erwartet der Medieninhalt-Server 60 auch noch eine AVS-Nutzerkennung, die anzeigt, dass ein neuer Kunde sich anmelden möchte. Im vorliegenden Beispiel jedoch wird die dem Nutzer 1 zugeordnete Nutzerkennung für die angeforderte Webseite zum Server 20 weitergeleitet. Der Server 20, d. h. die Steuereinrichtung 24, kann gemäß einer vorteilhaften Ausbildung unter Ansprechen auf die empfangene Nutzerkennung die dem Nutzer 1 zugeordnete AVS-Nutzerkennung aus der Speichereinrichtung 23 auslesen und zur AVS-Datenbank 30 über eine Kommunikationsverbindung übertragen. Ferner veranlasst die Steuereinrichtung 24 die Erzeugungseinrichtung 21, ein neues Einmalpasswort unter Verwendung des im Speicher 23 hinterlegten, gemeinsamen, geheimen Passworts des Nutzers 1 zu erzeugen. Die Prüfeinrichtung 22 prüft dann wiederum das von der Erzeugungseinrichtung 21 erzeugte Einmalpasswort und das vom Mobilfunktelefon empfangenen Einmalpasswort sowie die im Speicher 23 für den Nutzer 1 hinterlegte AVS-PIN mit der vom Mobilfunktelefon 40 empfangenen AVS-PIN. Zudem prüft die Altersverifizierungseinrichtung 32 unter Ansprechen auf die vom Server 20 empfangene AVS-Nutzerkennung die dem Nutzer 1 zugeordneten Altersangaben. Angenommen sei, dass sowohl die Altersverifizierung als auch die Authentifizierung die Berechtigung des Nutzers 1, auf die vom Medieninhalt-Servers 60 angebotene Webseite zuzugreifen, bestätigt haben. Daraufhin überträgt die Steuereinrichtung 24 eine entsprechende Meldung an den Medieninhalt-Server 60, der den Zugriff des Personalcomputers 50 auf die im Speicher 63 hinterlegten Webseiten freigibt und die angeforderte Webseite zum Personal Computer 50 überträgt.

Der Zugang zu dem Medieninhalt-Server 60 wird natürlich nicht freigeschaltet, wenn die Authentifizierung des Nutzer 1 im Server 20 und/oder die Altersverifizierung in der Altersverifizierungsrichtung 32 kein positives Ergebnis liefern.

Nachfolgend wird beispielhaft erläutert, wie sich der Nutzer 1 am Authentifizierungs- und Altersverifizierungsdienst anmelden kann. Angenommen sei hierzu, dass der Nutzer 1 einen Laufzeitvertrag bei einem Mobilfunkanbieter abschließen möchte. Hierzu beantragt er zunächst einen Mobilfunkzugang. Zusätzlich meldet sich der Nutzer 1 zu dem Authentifizierungs- und Altersverifizierungsdienst "AVS via OTP18" unter Vergabe seiner persönlichen AVS-PIN und seiner persönlichen AVS-Nutzerkennung an. Wie bereits gesagt, werden diese Angaben des Nutzers 1, der den Authentifizierungs- und Altersverifizierungsdienst nutzen will, zusammen mit der AVS-Nutzerkennung, welche beispielsweise die Mobilfunknummer des Mobilfunktelefons 40 sein kann, in der AVS-Datenbank 30 abgelegt.

Alternativ können sich Bestandskunden, d. h. Kunden, die bereits einen Laufzeitvertrag bei einem Mobilfunkanbieter besitzen und sich einer Face-to-Face-Kontrolle unterzogen haben, über ein Web-Front-End für den Authentifizierungs- und Altersverifizierungsdienst anmelden. Die Verknüpfung mit dem Bestandskunden, zum Beispiel dem Nutzer 1, erfolgt hierbei über eine Mobilfunkrufnummer. Zur Sicherstellung, dass der Vertragsinhaber sich zum Authentifizierungs- und Altersverifizierungsdienst anmelden darf, muss er die ihm vom Mobilfunkbetreiber zugewiesene PUK2-Kennung angeben, die dann durch den Mobilfunkbetreiber überprüft wird. Stellt der Mobilfunkbetreiber fest, dass der Nutzer 1 volljährig ist und dass das Mobilfunktelefon 40 eine geeignete SIM-Karte enthält, wird das OTP-Applet automatisch vom Mobilfunkanbieter automatisch auf die SIM-Karte geladen. Die Übertragung des OTP-Applets erfolgt über eine Funkverbindung gemäß der Over-the-Air-Technologie._ Hierzu muss das Mobilfunktelefon 40 jedoch in einem Mobilfunknetz eingebucht sein.

## Patentansprüche

1. Verfahren zum Steuern des Zugangs zu Medieninhalten in Abhängigkeit des Alters eines Nutzers, mit folgenden Schritten:
a) Eingeben einer ersten Nutzerkennung des Nutzers an einem Kommunikationsendgerät (40, 50) eines einen Medieninhalt anfordernden Nutzers;
b) Übertragen der ersten Nutzerkennung zu einem Medieninhalt-Server (60) eines Anbieters und einem Server (20) eines Trust-Centers;
c) Erzeugen eines ersten, nur für den aktuell angeforderten Medieninhalt gültigen Einmalpasswortes in einem mobilen Endgerät (40), welches dem den Medieninhalt anfordernden Nutzer zugeordnet ist;
d) Erzeugen eines zweiten Einmalpasswortes in dem Server (20) des Trust-Centers unter Ansprechen auf die erste und/oder eine zweite Nutzerkennung des Nutzers;
e) Übertragen des ersten Einmalpassworts vom mobilen Endgerät (40) zum Server (20) des Trust-Centers;
f) Vergleichen des ersten und zweiten Einmalpasswortes im Server (20) des Trust-Centers;
g) Ermitteln, unter Ansprechen auf die zweite, dem Nutzer zugeordnete Nutzerkennung, ob der Medieninhalt anfordernde Nutzer ein vorbestimmtes Mindestalter hat, durch eine Ermittlungseinrichtung (32); und
h) Steuern des Zugangs zu dem angeforderten Medieninhalt in Abhängigkeit von den Ergebnissen der Schritte f) und g) durch eine Steuereinrichtung (24).

2. Verfahren nach Anspruch 1,
**dadurch gekennzeichnet, dass**
das erste und zweite Einmalpasswort jeweils unter Verwendung eines gemeinsamen geheimen Basispasswortes erzeugt werden.

3. Verfahren nach einem der vorhergehenden Ansprüche,
**dadurch gekennzeichnet, dass**
bei erstmaliger Eingabe der ersten Nutzerkennung Schritt a) den Schritt des Eingebens der zweiten Nutzerkennung und Schritt b) den Schritt des Übertragens der zweiten Nutzerkennung zum Server (20) des Trust-Centers enthält und dass die erste Nutzerkennung im Medieninhalt-Server (60) gespeichert wird.

4. Verfahren nach Anspruch 3,
**dadurch gekennzeichnet, dass**
der den Medieninhalt anfordernde Nutzer im Server (20) des Trust-Centers in einer anbieterbezogenen Benutzergruppe abgelegt wird, wenn in Schritt f) festgestellt wird, dass das erste und zweite Einmalpasswort übereinstimmen, und wenn in Schritt g) festgestellt wird, das der Nutzer ein vorbestimmtes Mindestalter besitzt.

5. Verfahren nach einem der vorhergehenden Ansprüche,
**dadurch gekennzeichnet, dass**
Schritt g) folgende Schritte umfasst:
Zugreifen auf die in einer Datenbank (30) gespeicherten Nutzerinformationen, welche nutzerindividuelle Daten, insbesondere das Alter, und
die zweite Nutzerkennung des wenigstens einen Nutzers enthalten.

6. Verfahren nach einem der vorhergehenden Ansprüche,
**dadurch gekennzeichnet, dass**
im Server (20) des Trust-Centers die erste und zweite Nutzerkennung sowie ein gemeinsames geheimes Basispasswort des wenigstens einen Nutzers gespeichert werden.

7. Verfahren nach Anspruch 6,
**dadurch gekennzeichnet, dass**
Schritt d) folgende Schritte umfasst:
Auswählen unter Ansprechen auf die erste und/oder zweite Nutzerkennung das diesem Nutzer zugeordnete gemeinsame geheime Basispasswort und Erzeugen des zweiten Einmalpasswortes unter Verwendung des ausgewählten gemeinsamen geheimen Basispassworts.

8. Verfahren nach einem der vorhergehenden Ansprüche,
**dadurch gekennzeichnet, dass**
die zweite Nutzerkennung die Rufnummer des mobilen Endgeräts (40) ist.

9. Verfahren nach einem der vorhergehenden Ansprüche,
**dadurch gekennzeichnet, dass**
das Kommunikationsendgerät das mobile Endgerät (40) oder ein separates Endgerät (50) ist.

10. Verfahren nach einem der vorhergehenden Ansprüche,
**dadurch gekennzeichnet, dass**
der Zugriff auf den angeforderten Medieninhalt freigegeben wird, wenn das erste und zweite Einmalpasswort übereinstimmen und der Nutzer das vorbestimmte Mindestalter hat.

11. Verfahren nach einem der vorhergehenden Ansprüche,
**dadurch gekennzeichnet, dass**
im Server (20) des Trust-Centers eine dem Nutzer zugeordnete Nutzer-Pin gespeichert wird,
in Schritt e) das erste Einmalpasswort und eine Nutzer-Pin vom mobilen Endgerät (40) zum Server (20) des Trust-Centers übertragen werden, und dass in Schritt f) die vom mobilen Endgerät (40) empfangene Nutzer-Pin mit der für den Nutzer gespeicherten Nutzer-Pin verglichen wird.

12. Kommunikationssystem (10) zum Steuern des Zugangs zu Medieninhalten in Abhängigkeit des Alters eines Nutzers, mit
- einem Server (20) eines Trust-Centers, der folgende Merkmale aufweist:
eine Speichereinrichtung (23), in der für wenigstens einen Nutzer eine erste und eine zweite Nutzerkennung gespeichert sind,
eine erste Erzeugungseinrichtung (21) zum Erzeugen eines Einmalpasswort unter Ansprechen auf die erste und/oder zweite Nutzerkennung und eine Vergleichseinrichtung (22) zum Vergleichen eines erzeugten Einmalpassworts mit einem von einem mobilen Endgerät (40) empfangenen Einmalpassworts;
- wenigstens einem mobilen Endgerät (40), welches eine zweite Erzeugungseinrichtung (41) zum Erzeugen eines Einmalpassworts und eine Sendeeinrichtung zum Aussenden des Einmalpassworts zum Server (20) des Trust-Centers aufweist;
- wenigstens einen Medieninhalt-Server (60);
- eine Datenbank (30), in der nutzerindividuelle Daten, insbesondere das Alter, und die zweite Nutzerkennung des wenigstens einen Nutzers gespeichert sind;
- eine Ermittlungseinrichtung (32) zum Ermitteln, unter Ansprechen auf in der Datenbank (30) gespeicherten nutzerindividuellen Daten, ob der einen Medieninhalt anfordernde Nutzer ein vorbestimmtes Mindestalter hat; und
- eine Steuereinrichtung (24) zum Steuern des Zugangs zu dem im Medieninhalt-Server (60) bereitgestellten Medieninhalt in Abhängigkeit vom Ergebnis der Vergleichseinrichtung (22) und der Ermittlungseinrichtung (32).

13. Kommunikationssystem nach Anspruch 12,
**dadurch gekennzeichnet, dass**
die Datenbank (30) und die Ermittlungseinrichtung (32) dem Trust-Center zugeordnet sind.

14. Kommunikationssystem nach Anspruch 12 oder 13,
**gekennzeichnet durch**
eine Eingabeeinrichtung (51) zum Eingeben der ersten und/oder zweiten Nutzerkennung sowie eine dritte Erzeugungseinrichtung zum Erzeugen eines Anforderungssignals zur Anforderung eines Medieninhalts am Medieninhalt-Server (60), wobei die Eingabeeinrichtung (51) und die Erzeugungseinrichtung dem mobilen Endgerät (40) oder einer separaten Kommunikationseinrichtung (50) zugeordnet sind.

## Claims

1. A method for controlling access to media contents in dependance of the age of a user, comprising the following steps:
a) inputting a first user identification of the user at a communication terminal (40, 50) of a user requesting a media content;
b) transmitting the first user identification to a media content server (60) of a provider and a server (20) of a trust center;
c) generating a first one-time password valid only for the currently requested media content, in a mobile terminal (40) associated with the user requesting the media content;
d) generating a second one-time password in the server (20) of the trust center in response to the first and/or a second user identification of the user;
e) transmitting the first one-time password from the mobile terminal (40) to the server (20) of the trust center;
f) comparing the first and second one-time passwords in the server (20) of the trust center;
g) determining, in response to the second user identification associated with the user, whether the user requesting media content has a predetermined minimum age, by a determining device (32); and
h) controlling access to the requested media content as a function of the results of steps f) and g), by a control device (24).

2. The method according to claim 1,
**characterized in that**
the first and second one-time passwords are each generated using a shared secret basic password.

3. The method according to any one of the preceding claims,
**characterized in that**
upon the first input of the first user identification, step a) comprises the step of inputting the second user identification and step b) comprises the step of transmitting the second user identification to the server (20) of the trust center, and that the first user identification is stored in the media content server (60).

4. The method according to claim 3,
**characterized in that**
the user requesting the media content is stored in the server (20) of the trust center in a provider-specific user group if it is determined in step f) that the first and second one-time passwords match and if it is determined in step g) that the user has a predetermined minimum age.

5. The method according to any one of the preceding claims,
**characterized in that**
step g) comprises the following steps:
accessing the user information stored in a database (30) which contains user-specific data, in particular the age and the second user identification of the at least one user.

6. The method according to any one of the preceding claims,
**characterized in that**
the first and second user identifications and a shared secret basic password of the at least one user are stored in the server (20) of the trust center.

7. The method according to claim 6,
**characterized in that**
step d) comprises the following steps:
selecting, in response to the first and/or second user identifications, the shared secret basic password associated with this user, and generating the second one-time password using the selected shared secret basic password.

8. The method according to any one of the preceding claims,
**characterized in that**
the second user identification is the call number of the mobile terminal (40).

9. The method according to any one of the preceding claims,
**characterized in that**
the communication terminal is the mobile terminal (40) or a separate terminal (50).

10. The method according to any one of the preceding claims,
**characterized in that**
access to the requested media content is enabled when the first and second one-time passwords match and the user has the predetermined minimum age.

11. The method according to any one of the preceding claims,
**characterized in that**
a user PIN associated with the user is stored in the server (20) of the trust center,
in step e), the first one-time password and a user PIN are transmitted from the mobile terminal (40) to the server (20) of the trust center, and that in step f) the user PIN received from the mobile terminal (40) is compared with the user PIN stored for the user.

12. A communication system (10) for controlling access to media contents in dependance of the age of a user, comprising:
- a server (20) of a trust center, having the following features:
a storage device (23) which stores a first and a second user identification for at least one user;
a first generating device (21) for generating a one-time password in response to the first and/or second user identifications; and
a comparing device (22) for comparing a generated one-time password with a one-time password received from a mobile terminal (40);
- at least one mobile terminal (40) which has a second generating device (41) for generating a one-time password and a transmitting device for transmitting the one-time password to the server (20) of the trust center;
- at least one media content server (60);
- a database (30) which stores user-specific data, in particular the age and the second user identification of the at least one user;
- a determining device (32) for determining, in response to user-specific data stored in the database (30), whether the user requesting a media content has a predetermined minimum age; and
- a control device (24) for controlling the access to the media content provided in the media content server (60) as a function of the result of the comparing device (22) and the determining device (32).

13. The communication system according to claim 12,
**characterized in that**
the database (30) and the determining device (32) are associated with the trust center.

14. The communication system according to claim 12 or 13,
**characterized by**
an input device (51) for inputting the first and/or second user identifications, and a third generating device for generating a request signal for requesting a media content from the media content server (60), wherein the input device (51) and the generating device are associated with the mobile terminal (40) or with a separate communication device (50).

## Revendications

1. Procédé de commande d'accès à des contenus médias en fonction de l'âge d'un utilisateur, comprenant les étapes suivantes :
a) saisie d'un premier identifiant utilisateur de l'utilisateur sur un terminal de communication (40, 50) d'un utilisateur appelant un contenu média ;
b) transmission du premier identifiant utilisateur à un serveur de contenus médias (60) d'un opérateur et à un serveur (20) d'un centre de confiance ;
c) génération d'un premier mot de passe unique exclusivement valide pour le contenu média actuellement appelé dans un terminal mobile (40), associé à l'utilisateur appelant le contenu média ;
d) génération d'un deuxième mot de passe unique dans le serveur (20) du centre de confiance en réaction au premier et/ou à un deuxième identifiant utilisateur de l'utilisateur ;
e) transmission du premier mot de passe unique du terminal mobile (40) au serveur (20) du centre de confiance ;
f) comparaison du premier et du deuxième mot de passe unique dans le serveur (20) du centre de confiance ;
g) détermination, par un dispositif de détermination (32), en réaction au deuxième identifiant utilisateur associé à l'utilisateur, si l'utilisateur appelant le contenu média présente un âge minimum prédéfini ; et
h) commande d'accès au contenu média appelé par un dispositif de commande (24) en fonction des résultats des étapes f) et g).

2. Procédé selon la revendication 1, **caractérisé en ce que** :
le premier et le deuxième mot de passe unique sont générés chacun en recourant à un mot de passe de base secret commun.

3. Procédé selon l'une des revendications précédentes, **caractérisé en ce que** :
à la première saisie du premier identifiant utilisateur, l'étape a) comprend l'étape de saisie du deuxième identifiant utilisateur et l'étape b) comprend l'étape de transmission du deuxième identifiant utilisateur au serveur (20) du centre de confiance, et **en ce que**
le premier identifiant utilisateur est mémorisé dans le serveur de contenus médias (60).

4. Procédé selon la revendication 3, **caractérisé en ce que** :
l'utilisateur appelant le contenu média est mémorisé dans le serveur (20) du centre de confiance, dans un groupe d'utilisateurs relatif à l'opérateur, s'il est constaté à l'étape f) que le premier et le deuxième mot de passe unique sont concordants, et s'il est constaté à l'étape g) que l'utilisateur présente un âge minimum prédéfini.

5. Procédé selon l'une des revendications précédentes, **caractérisé en ce que** l'étape g) comprend les étapes suivantes :
accès aux informations d'utilisateur mémorisées dans une base de données (30), lesquelles contiennent des données spécifiques à l'utilisateur, en particulier son âge, et le deuxième identifiant utilisateur dudit au moins un utilisateur.

6. Procédé selon l'une des revendications précédentes, **caractérisé en ce que** :
le premier et le deuxième identifiant utilisateur ainsi qu'un mot de passe de base secret commun dudit au moins un utilisateur sont mémorisés dans le serveur (20) du centre de confiance.

7. Procédé selon la revendication 6, **caractérisé en ce que** l'étape d) comprend les étapes suivantes :
sélection, en réaction au premier et/ou au deuxième identifiant utilisateur, du mot de passe de base secret commun associé audit utilisateur, et génération du deuxième mot de passe unique en recourant au mot de passe de base secret commun sélectionné.

8. Procédé selon l'une des revendications précédentes, **caractérisé en ce que** :
le deuxième identifiant utilisateur est le numéro d'appel du terminal mobile (40).

9. Procédé selon l'une des revendications précédentes, **caractérisé en ce que** :
le terminal de communication est le terminal mobile (40) ou un terminal séparé (50).

10. Procédé selon l'une des revendications précédentes, **caractérisé en ce que** :
l'accès au contenu média appelé est rendu libre si le premier et le deuxième mot de passe unique concordent et si l'utilisateur a l'âge minimum prédéfini.

11. Procédé selon l'une des revendications précédentes, **caractérisé en ce que** :
un numéro d'identification personnel d'utilisateur associé à l'utilisateur est mémorisé dans le serveur (20) du centre de confiance,
à l'étape e), le premier mot de passe unique et un numéro d'identification personnel d'utilisateur sont transmis du terminal mobile (40) au serveur (20) du centre de confiance, et **en ce que**
à l'étape f), le numéro d'identification personnel d'utilisateur reçu du terminal mobile (40) est comparé au numéro d'identification personnel d'utilisateur mémorisé pour l'utilisateur.

12. Système de communication (10) pour la commande d'accès à des contenus médias en fonction de l'âge d'un utilisateur, comprenant :
- un serveur (20) d'un centre de confiance, présentant les caractéristiques suivantes :
un dispositif de mémorisation (23), où un premier et un deuxième identifiant utilisateur sont mémorisés pour au moins un utilisateur,
un premier dispositif générateur (21) pour la génération d'un mot de passe unique en réaction au premier et/ou au deuxième identifiant utilisateur et un dispositif comparateur (22) pour la comparaison d'un mot de passe unique généré à un mot de passe unique reçu d'un terminal mobile (40) ;
- au moins un terminal mobile (40) comprenant un deuxième dispositif générateur (41) pour la génération d'un mot de passe unique et un dispositif émetteur pour l'émission du mot de passe unique vers le serveur (20) du centre de confiance ;
- au moins un serveur de contenus médias (60) ;
- une base de données (30), où sont mémorisées des données spécifiques à l'utilisateur, en particulier son âge, et le deuxième identifiant utilisateur dudit au moins un utilisateur ;
- un dispositif de détermination (32) pour la détermination, en réaction à des données spécifiques à l'utilisateur mémorisées dans la base de données (30), si l'utilisateur appelant un contenu média présente un âge minimum prédéfini ; et
- un dispositif de commande (24) pour la commande d'accès au contenu média mis à disposition dans le serveur de contenus médias (60) en fonction du résultat du dispositif comparateur (22) et du dispositif de détermination (32).

13. Système de communication selon la revendication 12, **caractérisé en ce que** :
la base de données (30) et le dispositif de détermination (32) sont affectées au centre de confiance.

14. Système de communication selon la revendication 12 ou 13, **caractérisé par** :
un dispositif d'entrée (51) pour la saisie du premier et/ou du deuxième identifiant utilisateur, ainsi qu'un troisième dispositif générateur pour la génération d'un signal de demande pour l'appel d'un contenu média dans le serveur de contenus médias (60), le dispositif d'entrée (51) et le dispositif générateur étant affectés au terminal mobile (40) ou à un dispositif de communication séparé (50).
